(19) **Europäisches Patentamt**
**European Patent Office**
**Office européen des brevets**

(11) EP 2 700 689 B1

(12) **EUROPEAN PATENT SPECIFICATION**

(45) Date of publication and mention of the grant of the patent:
**31.05.2017 Bulletin 2017/22**

(21) Application number: **12773588.4**

(22) Date of filing: **12.04.2012**

(51) Int Cl.:
*B60C 1/00* (2006.01)    *B32B 7/12* (2006.01)
*B32B 25/00* (2006.01)   *C09J 107/00* (2006.01)
*B29D 30/30* (2006.01)   *B32B 25/08* (2006.01)
*B32B 25/16* (2006.01)   *B60C 5/14* (2006.01)
*C09J 11/06* (2006.01)   *C09J 109/00* (2006.01)
*B29L 30/00* (2006.01)   *B29C 65/48* (2006.01)
*B29C 65/00* (2006.01)   *B29C 35/02* (2006.01)
*C08J 5/12* (2006.01)    *C08K 5/00* (2006.01)
*C09J 5/06* (2006.01)

(86) International application number:
**PCT/JP2012/002560**

(87) International publication number:
**WO 2012/144172 (26.10.2012 Gazette 2012/43)**

(54) **ADHESIVE COMPOSITION, BONDING METHOD USING SAME, LAMINATE AND TIRE**

HAFTZUSAMMENSETZUNG, BINDEVERFAHREN DAMIT, LAMINAT UND REIFEN

COMPOSITION ADHÉSIVE, PROCÉDÉ DE FIXATION UTILISANT CELLE-CI, LAMINÉ ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.04.2011 JP 2011092415**

(43) Date of publication of application:
**26.02.2014 Bulletin 2014/09**

(73) Proprietor: **Bridgestone Corporation Tokyo 104-8340 (JP)**

(72) Inventors:
• **OGASAWARA, Takuya**
  **Kodaira-shi**
  **Tokyo 187-8531 (JP)**
• **NAKAGAWA, Ryuji**
  **Kodaira-shi**
  **Tokyo 187-8531 (JP)**
• **HAYAKAWA, Kotaro**
  **Kodaira-shi**
  **Tokyo 187-8531 (JP)**
• **CHIASHI, Hideyuki**
  **Kodaira-shi**
  **Tokyo 187-8531 (JP)**

(74) Representative: **Oxley, Robin John George et al Marks & Clerk LLP 90 Long Acre London WC2E 9RA (GB)**

(56) References cited:
EP-A1- 1 666 242        EP-A1- 1 818 187
EP-A1- 2 045 102        JP-A- 8 216 609
JP-A- 11 263 954        JP-A- 2009 528 178
JP-A- 2010 215 725      JP-A- 2010 254 769
JP-A- 2011 213 945      US-A- 5 088 537
US-A1- 2009 165 913     US-A1- 2010 186 866

## Description

The present invention relates to an adhesive composition and a adhesion method using the same, as well as a laminate and a tire, and in particular, to an adhesive composition that may improve both adhesiveness to a film layer and adhesiveness to a rubber layer, and an adhesion method using the same, as well as a laminate formed by the method and a tire using the laminate.

BACKGROUND ART

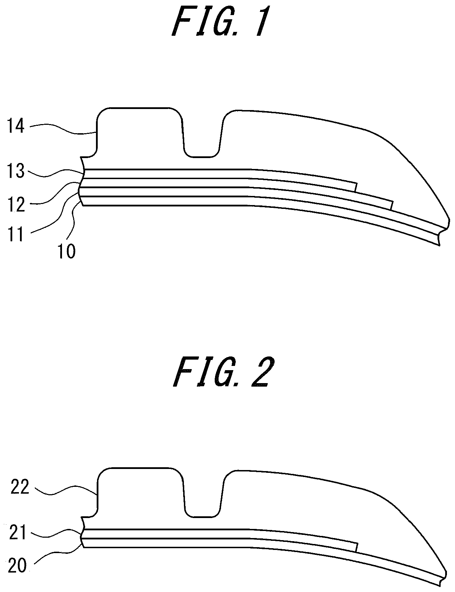

As an inner liner structure of tires, a three-layered structure is known that is formed by a resin film layer (film layer) 10, an adhesive layer (insulation layer) 11 and a butyl inner layer (rubber layer) 12 as illustrated in FIG. 1. In this case, a rubber composition that is mainly composed of butyl rubber, halogenated butyl rubber, and so on is used for the butyl inner layer 12, which is disposed on the inner surface of the tire as an air barrier layer to maintain the inner pressure of the tire. In addition, a known technique utilizes a film that is composed of a thermoplastic resin and a thermoplastic elastomer as the resin film layer 10. Moreover, a variety of materials have been considered as candidates for the adhesive layer 11 (see, for example, JP 7-082418 A (PTL 1) and JP 2007-098843 A (PTL 2)).

Since the aforementioned three-layered, inner liner structure involves the resin film layer 10 and the butyl inner layer 12, the resulting tire would have high resistance to air permeability, but may be heavy in weight.

To address such a deficiency, studies have been made to reduce the weight of the tire by removing the butyl inner layer 12 and a squeegee layer 13 (FIG. 2), in which case, however, another problem occurs of insufficient adhesiveness between a resin film layer (film layer) 20 and a carcass cord layer (rubber layer) 22.

To overcome such a problem, a known technique allows a resin film layer 20 to be adhered to a carcass cord layer 22 by applying a commercially available adhesive, such as METALOCK R-46 (manufactured by Toyo Chemical Co., Ltd.) and Chemlok 6250 (manufactured by LORD Corporation), to the resin film layer 20 or the carcass cord layer 22.

However, an adhesive layer 21 formed by the aforementioned commercially available adhesive has low tackiness, making it difficult to improve both adhesiveness to the resin film layer 20 and adhesiveness to the carcass cord layer 22, and resulting in insufficient adhesiveness between the resin film layer 20 and the carcass cord layer 22. Thus, it is desired to apply such adhesives that enable stable production of tires without causing exfoliation of the resin film layer 20 from the carcass cord layer 22.

There is another requirement to use more environment-friendly adhesives without lead, halogen, and so on. EP2045102, US2009/165913, EP1818187, EP1666242, US5088537, US2010/186866, JP2009 528178, JP2010 254769 and JP11 263954 disclose adhesive compositions.

CITATION LIST

Patent Literature
(PTL 1: JP 7-082418 A
PTL 2: JP 2007-098843 A

SUMMARY OF INVENTION

(Technical Problem)

An object of the present invention is to provide an adhesive composition that may improve both adhesiveness to a film layer and adhesiveness to a rubber layer, and an adhesion method using the same, as well as a laminate and a tire. Another object of the present invention is to provide an adhesive composition that may improve both adhesiveness to a film layer and adhesiveness to a rubber layer, and furthermore, prevent the occurrence of cracks by restricting an increase in low-temperature elastic modulus of a rubber layer, and an adhesion method using the same, as well as a laminate and a tire.

(Solution to Problem)

The inventors of the present invention have made intensive studies to achieve the aforementioned objects and found that these objects may be accomplished when an adhesive composition comprises: a rubber component containing a diene-based elastomer; and a compound having a polar functional group in its molecule. The present invention has been contrived based on this discovery.

That is, an adhesive composition according to the present invention comprises: a rubber component containing a diene-based elastomer; and a compound having in its molecule a part crosslinkable with a diene-based rubber, and a polar functional group.

The compound has a molecular weight of 500 or less. It is desirable that the polar functional group has any of a nitrogen atom, an oxygen atom, a sulfur atom, a silicon atom, and a tin atom.

The polar functional group is desirably at least one selected from an amino group, an imino group, a nitrile group, an ammonium group, an isocyanate group, an imide group, an amide group, a hydrazo group, an azo group, a diazo group, a hydroxyl group, a carboxyl group, a carbonyl group, an epoxy group, an oxycarbonyl group, a sulfide group, a disulfide group, a sulfonyl group, a sulfinyl group, a thiocarbonyl group, a nitrogen-containing heterocyclic group, an oxygen-containing heterocyclic group, an alkoxysilyl group, and a tin-containing group.

It is desirable that the compound has a part crosslinkable with a diene-based rubber and the crosslinkable part contains a sulfur atom and/or a vinyl group. The content of the compound is 10 parts by mass to 90 parts by mass per 100 parts by mass of the diene-based elastomer.

The adhesive composition may further comprise a crosslinking agent, or a crosslinking agent and a crosslinking promoter.

An adhesion method according to the present invention comprises: disposing the aforementioned adhesive composition between a film layer and an unvulcanized rubber layer; and vulcanizing the film layer and the unvulcanized rubber layer.

The film layer may contain at least one selected from a polyamide-based polymer, an ethylene-vinyl alcohol-based copolymer, a urethane-based polymer, an olefin-based polymer, and a diene-based polymer.

An application liquid formed by dissolving the adhesive composition in a good solvent may be applied to the film layer or the unvulcanized rubber layer.

The adhesive composition may also be formed into a sheet and disposed between the film layer and the unvulcanized rubber layer.

A laminate according to the present invention is formed by the adhesion method according to the present invention.

In addition, a tire according to the present invention comprises the laminate of the present invention.

(Advantageous Effect of Invention)

The present invention may provide an adhesive composition that can improve both adhesiveness to a film layer and adhesiveness to a rubber layer, and an adhesion method using the same, as well as a laminate and a tire. Furthermore, the present invention may provide an adhesive composition that may improve both adhesiveness to a film layer and adhesiveness to a rubber layer, and furthermore, prevent the occurrence of cracks by restricting an increase in low-temperature elastic modulus of a rubber layer, and an adhesion method using the same, as well as a laminate and a tire.

BRIEF DESCRIPTION OF THE DRAWING

FIG. 1 is a schematic configuration diagram illustrating an example of inner liner structure.
FIG. 2 is a schematic configuration diagram illustrating another example of inner liner structure.

DESCRIPTION OF EMBODIMENTS

The present invention will now be specifically described below with reference to the accompanying drawings as appropriate.

**(Adhesive Composition)**

An adhesive composition according to the present invention comprises at least a rubber component and a low-molecular compound, and, optionally, a crosslinking agent, a crosslinking promoter and other components.

**<Rubber Components>**

The rubber component contains at least a diene-based elastomer and, optionally, other optional components.

**-Diene-based Elastomer-**

The diene-based elastomer may be selected appropriately depending on the intended use without any particular limitation, examples thereof including natural rubber (NR), polyisoprene rubber (IR), polybutadiene rubber (BR) and styrene butadiene rubber (SBR), and may even be modified. A preferred example of modified rubbers is epoxidized natural rubber (ENR). These examples may be used alone or in combination of two or more.

Among these, preferred are natural rubber (NR) and epoxidized natural rubber (ENR) in terms of co-crosslinkability, fatigue resistance and tackiness.

As used herein, the degree of epoxidation represents the molar percentage (mol%) of olefin-unsaturated positions originally present in the rubber which has been converted into oxirane, and may also be referred to as "oxirane enzyme concentration." For example, the degree of epoxidation may be calculated using nuclear magnetic resonance (NMR) (JNM-ECA series available from JEOL Ltd.), and so forth.

Specifically, for example, the degree of epoxidation can be determined by the following method.

Each of the prepared epoxidized natural rubber samples (ENR) was dissolved in deuterated chloroform and the degree of epoxidation (epoxidation rate) of the sample was calculated by nuclear magnetic resonance (NMR) (JNM-ECA series available from JEOL Ltd.)) spectroscopy from a ratio of an integral value h (ppm) of the carbon-carbon double bond portion to an integral value h (ppm) of the aliphatic portion, using the following calculation formula:

$$\text{degree of epoxidation (epoxidation rate)} =$$
$$3 \times h(2.69) \, / \, (3 \times h(2.69) + 3 \times h(5.14) + h(0.87)) \times 100$$

The epoxidized natural rubber (ENR) may be formed by using a commercially available epoxidized natural rubber or epoxidizing a natural rubber.

Methods for epoxidizing a natural rubber are not particularly limited and may be selected appropriately depending on the intended use, including, for example, a chlorohydrin process, a direct oxidation process, a hydrogen peroxide process, an alkyl hydroperoxide process, and a peroxidation process. The peroxidation process includes, for example, a process to allow a natural rubber to react with an organic peracid, such as peracetic acid and performic acid.

**<Low-molecular Compound>**

Preferably, the low-molecular compound further comprises a part crosslinkable with a diene-based rubber in its molecule, although it may be selected appropriately depending on the intended use without any particular limitation as long as it has a polar functional group in its molecule. Examples of the low-molecular compound include 4-vinylcyclohexene-1,2-epoxide, 4-hydroxythiophenol, 2,3-dimercaptopropanol, and 3-isocyanatopropyltriethoxysilane. These examples may be used alone or in combination of two or more.
Among these, preferred is 2,3-dimercaptopropanol in terms of better adhesiveness.

The molecular weight of the low-molecular compound is not more than 500 and more preferably not more than 300, although it may be selected appropriately depending on the intended use without any particular limitation. If the low-molecular compound has a molecular weight of more than 500, it may react less with the film layer. In contract, if the low-molecular compound has a molecular weight within the aforementioned more preferable range, it is advantageous in terms of better reactivity with the film layer.

The content of the low-molecular compound is 10 parts by mass to 90 parts by mass, more preferably 50 parts by mass to 80 parts by mass, per 100 parts by mass of the diene-based elastomer, although it may be selected appropriately depending on the intended use without any particular limitation. If the content of the low-molecular compound is less than 10 parts by mass, this may result in insufficient adhesiveness to the film layer, while if the content is more than 90 parts by mass, this may lead to excessively high elastic modulus after crosslinking and lower fatigue resistance. In contract, if the content of the low-molecular compound is within the aforementioned more preferable range, it is advantageous in terms of balancing adhesiveness to the film layer and fatigue resistance.

**-Polar Functional Group-**

The polar functional group may be selected appropriately depending on the intended use without any particular limitation, and examples thereof include an amino group, an imino group, a nitrile group, an ammonium group, an isocyanate group, an imide group, an amide group, a hydrazo group, an azo group, a diazo group, a hydroxyl group, a carboxyl group, a carbonyl group, an epoxy group, an oxycarbonyl group, a sulfide group, a disulfide group, a sulfonyl group, a sulfinyl group, a thiocarbonyl group, a nitrogen-containing heterocyclic group, an oxygen-containing heterocyclic group, an alkoxysilyl group, and a tin-containing group. These examples may be used alone or in combination of two or more.

Among these, preferred are the amino group, isocyanate group, hydroxyl group and carboxyl group in terms of ability of enhancing adhesiveness to the resin film layer (film layer).

### -A Part Crosslinkable with a Diene-based Rubber-

The aforementioned part crosslinkable with a diene-based rubber may be selected appropriately depending on the intended use without any particular limitation, and examples thereof include an alkene-containing group, such as a thiol group, a vinyl group and an allyl group. These examples may be used alone or in combination of two or more.

Among these, preferred is the thiol group containing a sulfur atom in terms of ability of enhancing adhesiveness to the carcass cord layer (rubber layer).

### <Crosslinking Agent>

The aforementioned crosslinking agent may be selected appropriately depending on the intended use without any particular limitation, and examples thereof include sulfur, zinc oxide, and p,p'-dibenzoylquinonedioxime. These examples may be used alone or in combination of two or more.

Among these, preferred is sulfur in terms of better strength and fatigue resistance of the resulting adhesion layer.

The content of the crosslinking agent is preferably 0.5 parts by mass to 4 parts by mass per 100 parts by mass of the diene-based elastomer, although it may be selected appropriately depending on the intended use without any particular limitation.

If the content of the crosslinking agent is less than 0.5 parts by mass, this may result in insufficient strength of the adhesion layer after crosslinking, while if the content is more than 4 parts by mass, this may lead to excessively high elastic modulus after crosslinking and lower fatigue resistance.

### <Crosslinking Promoter>

The crosslinking promoter may be selected appropriately depending on the intended use without any particular limitation, and examples thereof include N,N'-dicyclohexyl-2-benzothiazolesulfenamide, diphenylguanidine, dibenzothiazyl disulfide, N-t-butyl-2-benzothiazylsulphenamide, hexamethylenetetramine, N,N'-diphenylthiourea, trimethylthiourea, N,N'-diethylthiourea, 1,3-diphenylguanidine, 2-mercaptobenzothiazole, and N-cyclohexyl-2-benzothiazolesulfenamide. These examples may be used alone or in combination of two or more.

Among these, preferred is N-cyclohexyl-2-benzothiazolylsulfenamide in terms of balancing adhesiveness to the film layer and adhesiveness to the rubber.

The content of the crosslinking promoter is preferably more than 0 parts by mass and not more than 2 parts by mass per 100 parts by mass of the diene-based elastomer, although it may be selected appropriately depending on the intended use without any particular limitation.

If the content of the crosslinking promoter is more than 2 parts by mass, adhesiveness to the film layer may be reduced.

### <Other Components>

The aforementioned other components may be selected appropriately depending on the intended use without any particular limitation, and examples thereof include carbon black, stearic acid, zinc oxide, a tackifying resin, and age resister. These examples may be used alone or in combination of two or more.

### -Tackifying Resin-

The aforementioned tackifying resin may be selected appropriately depending on the intended use without any particular limitation, and examples thereof include a rosin-based resin, a terpene-based resin, and a phenol-based resin. These examples may be used alone or in combination of two or more.

### -Age Resister-

The aforementioned age resister may be selected appropriately depending on the intended use without any particular limitation, and examples thereof include N-(1,3-dimethylbutyl)-N'-phenyl-p-phenylenediamine, 6-ethoxy-1,2-dihydro-2,2,4-trimethyl quinoline, N-phenyl-1-naphthylamine, alkylated diphenylamine, octylated diphenylamine, and a refined product of a polymeric material of 2,2,4-trimethyl-1,2-dihydroquinoline. These examples may be used alone or in combination of two or more.

**(Adhesion Method)**

An adhesion method according to the present invention may comprise at least a disposition step and a vulcanization step, as well as other optional steps.

**<Disposition Step>**

The aforementioned disposition step is a step of disposing the adhesive composition of the present invention between the film layer and the unvulcanized rubber layer.

In this case, the adhesive composition may also be formed into a sheet before being disposed between the film layer and the unvulcanized rubber layer.

**-Film Layer-**

The shape, structure and size of the aforementioned film layer may be selected appropriately depending on the intended use without any particular limitation.

The thickness of the film layer is preferably 2000 $\mu$m or less, although it may also be selected appropriately depending on the intended use without any particular limitation.

The film layer having a thickness of more than 2000 $\mu$m may result in poor fatigue durability.

The material of the film layer may be selected appropriately depending on the intended use without any particular limitation, and examples thereof include a polyamide-based polymer, an ethylene-vinyl alcohol-based copolymer, a urethane-based polymer, an olefin-based polymer, and a diene-based polymer. These examples may be used alone or in combination of two or more.

Among these, preferred is an ethylene-vinyl alcohol-based copolymer in terms of air retention.

**-Unvulcanized Rubber Layer-**

The shape, structure and size of the aforementioned unvulcanized rubber layer may be selected appropriately depending on the intended use without any particular limitation.

The thickness of the unvulcanized rubber layer is preferably in the range of 200 $\mu$m to 5000 $\mu$m, although it may also be selected appropriately depending on the intended use without any particular limitation.

The unvulcanized rubber layer having a thickness of less than 200 $\mu$m may result in poor operability during the disposition step, while the unvulcanized rubber layer having a thickness of more than 5000 $\mu$m may lead to poor fatigue durability.

The material of the unvulcanized rubber layer may be selected appropriately depending on the intended use without any particular limitation, and examples thereof include natural rubber, emulsion-polymerized styrene butadiene rubber, solution-polymerized styrene butadiene rubber, high cis-butadiene rubber, low cis-butadiene rubber, isoprene rubber, acrylonitrile-butadiene rubber, hydrogenated nitrile rubber, butyl rubber, halogenated butyl rubber, and chloroprene rubber. These examples may be used alone or in combination of two or more.

Among these, preferred is natural rubber in terms of co-crosslinkability with the adhesion layer, fatigue resistance and tackiness.

In addition, the unvulcanized rubber layer may be blended as appropriate with carbon black, sulfur, a vulcanization accelerator, an age resister, an additive such as aromatic oil.

**-Disposition-**

The way of performing the aforementioned disposition may be selected appropriately depending on the intended use without any particular limitation, and examples thereof include application to the film layer or the unvulcanized rubber layer.

While the way of performing the application may be selected appropriately depending on the intended use without any particular limitation, an application liquid that is formed by dissolving the adhesive composition of the present invention in a good solvent is preferably used.

The solid concentration of the application liquid is preferably in the range of 10 mass% to 40 mass%, although it may be selected appropriately depending on the intended use without any particular limitation.

The application liquid having a solid concentration of less than 10 mass% may result in poor application operability due to an excessively low viscosity of the application liquid, while the application liquid having a solid concentration of more than 40 mass% may lead to poor application operability due to an excessively high viscosity of the application liquid.

**--Good Solvent--**

The aforementioned good solvent may be selected appropriately depending on the intended use without any particular limitation, and examples thereof include toluene, cyclohexane, and THF.

**<Vulcanization Step>**

The aforementioned vulcanization step is a step of vulcanizing the film layer and the unvulcanized rubber layer.

**-Vulcanization-**

While the way of performing the aforementioned vulcanization may be selected appropriately depending on the intended use without any particular limitation, the vulcanization is preferably performed at temperatures of 120 °C to 180 °C for 0.1 hour to 0.8 hour.
If the temperature is lower than 120 °C, adhesiveness to the rubber may be insufficient, while if it is higher than 180 °C, adhesiveness to the film layer may be reduced.

**<Other Steps>**

The aforementioned other steps may be selected appropriately depending on the intended use without any particular limitation, and examples thereof include a thermal compression step.

**(Laminate)**

A laminate according to the present invention may be selected appropriately depending on the intended use without any particular limitation as long as members constituting the laminate are adhered to each other by the adhesion method according to the present invention, and examples thereof include a laminate having a three-layered structure formed by a resin film layer (film layer), an adhesive layer (insulation layer), and a carcass cord layer (rubber layer).

**(Tire)**

A tire according to the present invention is preferably a pneumatic tire, although it may be selected appropriately depending on the intended use without any particular limitation as long as it has the laminate according to the present invention.
The tire may be manufactured by a conventional method. For example, when the film layer is used as the inner liner of a pneumatic tire, a thermoplastic resin composition is extruded in advance into a film having a predetermined width and thickness. Then, the adhesive composition is applied onto the film and subsequently the film applied with the adhesive composition is attached to a tire molding drum in a cylindrical form so that a surface of the film to which the adhesive composition has not been applied faces the drum side (down). Successively laminated thereon are a carcass layer, a belt layer, a tread layer, which are composed of unvulcanized rubber, and other members used for the production of usual tires, after which the drum is withdrawn to obtain a green tire. Then, the green tire may be heated and vulcanized in accordance with a conventional method to thereby manufacture a desired pneumatic tire.

EXAMPLES

The present invention will now be specifically described below with reference to examples thereof in a non-limiting way.

**(Comparative Example 1)**

**<Adhesion>**

A composition formulated as shown in Comparative Example 1 of Table 1 was kneaded at 60 °C to 120 °C for 5 minutes using a kneader (trade name: Plastomill, manufacturer: Toyo Seiki Seisaku-sho, Ltd.) to obtain an adhesive composition.

Added to the obtained adhesive composition was toluene (trade name: special grade toluene, manufacturer: Kanto Chemical Co., Inc.) as a good solvent to prepare an application liquid having a solid concentration of 15 mass%.

A resin film layer (film layer) composed of ethylene vinyl alcohol to which the prepared application liquid had been applied was adhered to a carcass cord layer (rubber layer) composed of natural rubber, and the adhered product was vulcanized at a temperature of 160 °C for 20 minutes.

It should be noted that the resin film layer (film layer) was prepared in the following manner.

**<<Method of Manufacturing the Film Layer>>**

Ethylene-vinyl alcohol copolymer pellets (synthesized by the method disclosed in paragraph [0040] of WO2006/059621 as described below) were used to form a film using a film forming device composed of a 40 mmφ extruder (PLABOR GT-40-A manufactured by Research Laboratory of Plastics Technology Co., Ltd.) and a T-die under the following extrusion conditions to obtain a single-layer film of 20 μm thick.

Type: single-screw extruder (non-bent type)
L/D: 24
Bore: 40 mmφ
Screw: single full flight type, surface nitrided steel
Screw speed: 40 rpm
Die: 550 mm wide, coat hanger die
Lip gap: 0.3 mm
Cylinder and die temperature setting: C1/C2/C3/Adaptor/Die = 180/200/210/210/210 (°C)

**<<<Method of synthesizing ethylene-vinyl alcohol copolymer pellets>>>**

In this case, 2 parts by mass of an ethylene-vinyl alcohol copolymer having an ethylene content of 44 mol% and a degree of saponification of 99.9 mol% (MFR: 5.5 g/10 min (at 190 °C under load of 21.18 N)) and 8 parts by mass of N-methyl-2-pyrrolidone were fed to a pressure reactor vessel, which in turn was heated at 120 °C for 2 hours under stirring to thereby completely dissolve the ethylene-vinyl alcohol copolymer. Then, as an epoxy compound, 0.4 parts by mass of epoxypropane was added thereto, which was heated at 160 °C for 4 hours. Upon completion of the heating, the resulting product was precipitated in 100 parts by mass of distilled water and the precipitate was washed thoroughly with a large amount of distilled water to remove therefrom N-methyl-2-pyrrolidone and unreacted epoxypropane, whereby a modified ethylene-vinyl alcohol copolymer was obtained. Further, the modified ethylene-vinyl alcohol copolymer thus obtained was ground to a particle size of about 2 mm using a grinder and again washed thoroughly with a large amount of distilled water. The washed particles were vacuum dried for 8 hours at room temperature and then melt at 200 °C using a twin screw extruder for pelletization.

**<Adhesiveness Measurement>**

Adhesiveness between a resin film layer (film layer) and a carcass cord layer (rubber layer) was measured using a tensile testing machine (trade name: Strograph VE5D, manufacturer: Toyo Seiki Co., Ltd.) where a 25mm-wide test specimen was peeled at 180 °C. The measurement results are shown in Table 1.

**(Example 1)**

Adhesion and adhesiveness measurement were performed in the same manner as described in Comparative Example 1, except for the formulation as shown in Example 1 of Table 1 in place of that of Comparative Example 1 of Table 1. The measurement results are shown in Table 1.

**(Example 2)**

Adhesion and adhesiveness measurement were performed in the same manner as described in Comparative Example 1, except for the formulation as shown in Example 2 of Table 1 in place of that of Comparative Example 1 of Table 1. The measurement results are shown in Table 1.

**(Example 3)**

Adhesion and adhesiveness measurement were performed in the same manner as described in Comparative Example 1, except for the formulation as shown in Example 3 of Table 1 in place of that of Comparative Example 1 of Table 1. The measurement results are shown in Table 1.

**(Example 4)**

Adhesion and adhesiveness measurement were performed in the same manner as described in Comparative Example 1, except for the formulation as shown in Example 4 of Table 1 in place of that of Comparative Example 1 of Table 1. The measurement results are shown in Table 1.

**(Example 5)**

Adhesion and adhesiveness measurement were performed in the same manner as described in Comparative Example 1, except for the formulation as shown in Example 5 of Table 1 in place of that of Comparative Example 1 of Table 1. The measurement results are shown in Table 1.

**(Example 6)**

Adhesion and adhesiveness measurement were performed in the same manner as described in Comparative Example 1, except for the formulation as shown in Example 6 of Table 1 in place of that of Comparative Example 1 of Table 1. The measurement results are shown in Table 1.

**(Comparative Example 2)**

Adhesion and adhesiveness measurement were performed in the same manner as described in Comparative Example 1, except for the formulation as shown in Comparative Example 2 of Table 1 in place of that of Comparative Example 1 of Table 1. The measurement results are shown in Table 1.

**(Comparative Example 3)**

Adhesion and adhesiveness measurement were performed in the same manner as described in Comparative Example 1, except for the formulation as shown in Comparative Example 3 of Table 1 in place of that of Comparative Example 1 of Table 1. The measurement results are shown in Table 1.

**(Comparative Example 4)**

Adhesion and adhesiveness measurement were performed in the same manner as described in Comparative Example 1, except for the formulation as shown in Comparative Example 4 of Table 1 in place of that of Comparative Example 1 of Table 1. The measurement results are shown in Table 1.

**(Example 7)**

Adhesion and adhesiveness measurement were performed in the same manner as described in Comparative Example 1, except for the formulation as shown in Example 7 of Table 1 in place of that of Comparative Example 1 of Table 1. The measurement results are shown in Table 1.

**(Example 8)**

Adhesion and adhesiveness measurement were performed in the same manner as described in Comparative Example 1, except for the formulation as shown in Example 8 of Table 1 in place of that of Comparative Example 1 of Table 1. The measurement results are shown in Table 1.

**(Comparative Example 5)**

Adhesion and adhesiveness measurement were performed in the same manner as described in Comparative Example 1, except for the formulation as shown in Comparative Example 5 of Table 2 in place of that of Comparative Example 1 of Table 1. The measurement results are shown in Table 2.

**(Example 9)**

Adhesion and adhesiveness measurement were performed in the same manner as described in Comparative Example 1, except for the formulation as shown in Example 9 of Table 2 in place of that of Comparative Example 1 of Table 1. The measurement results are shown in Table 2.

**(Example 10)**

Adhesion and adhesiveness measurement were performed in the same manner as described in Comparative Example 1, except for the formulation as shown in Example 10 of Table 2 in place of that of Comparative Example 1 of Table 1. The measurement results are shown in Table 2.

**(Example 11)**

Adhesion and adhesiveness measurement were performed in the same manner as described in Comparative Example 1, except for the formulation as shown in Example 11 of Table 2 in place of that of Comparative Example 1 of Table 1. The measurement results are shown in Table 2.

[Table 1]

| | Comp. Ex. 1 | Ex. 1 | Ex. 2 | Ex. 3 | Ex. 4 | Ex. 5 | Ex. 6 | Comp. Ex. 2 | Comp. Ex. 3 | Comp. Ex. 4 | Ex. 7 | Ex. 8 |
|---|---|---|---|---|---|---|---|---|---|---|---|---|
| Natural Rubber (NR)[*1] | 100 | 100 | 100 | 100 | 100 | 100 | 100 | 100 | 100 | 100 | 100 | 100 |
| Low-molecular Compound[*2] | - | 10 | 50 | 80 | - | - | - | - | - | - | - | - |
| Low-molecular Compound[*3] | - | - | - | - | 10 | 50 | 80 | - | - | - | - | - |
| Low-molecular Compound[*4] | - | - | - | - | - | - | - | - | - | - | 10 | 80 |
| Low-molecular Compound[*5] | - | - | - | - | - | - | - | 10 | 50 | 80 | - | - |
| Carbon Black (C/B)[*6] | 30 | 30 | 30 | 30 | 30 | 30 | 30 | 30 | 30 | 30 | 30 | 30 |
| Stearic Acid | 1 | 1 | 1 | 1 | 1 | 1 | 1 | 1 | 1 | 1 | 1 | 1 |
| Zinc Oxide | 3 | 3 | 3 | 3 | 3 | 3 | 3 | 3 | 3 | 3 | 3 | 3 |
| Tackifying Resin[*7] | 10 | 10 | 10 | 10 | 10 | 10 | 10 | 10 | 10 | 10 | 10 | 10 |
| Age Resister[*8] | 1 | 1 | 1 | 1 | 1 | 1 | 1 | 1 | 1 | 1 | 1 | 1 |
| Crosslinking Promoter[*9] | 1.5 | 1.5 | 1.5 | 1.5 | 1.5 | 1.5 | 1.5 | 1.5 | 1.5 | 1.5 | 1.5 | 1.5 |
| Sulfur (Crosslinking Agent) | 1.05 | 1.05 | 1.05 | 1.05 | 1.05 | 1.05 | 1.05 | 1.05 | 1.05 | 1.05 | 1.05 | 1.05 |
| Adhesiveness (N/25 mm) | 20 | 30 | 50 | 70 | 25 | 45 | 65 | 20 | 20 | 20 | 30 | 70 |

EP 2 700 689 B1

[Table 2]

| | Comp. Ex. 5 | Ex. 9 | Ex. 10 | Ex. 11 |
|---|---|---|---|---|
| Epoxidized Natural Rubber[*10] | 100 | 100 | 100 | 100 |
| Low-molecular Compound[*2] | - | 10 | - | - |
| Low-molecular Compound[*3] | - | - | - | - |
| Low-molecular Compound[*4] | - | - | 10 | 80 |
| Low-molecular Compound[*5] | - | - | - | - |
| Carbon Black (C/B)[*6] | 30 | 30 | 30 | 30 |
| Stearic Acid | 1 | 1 | 1 | 1 |
| Zinc Oxide | 3 | 3 | 3 | 3 |
| Tackifying Resin[*7] | 10 | 10 | 10 | 10 |
| Age Resister[*8] | 1 | 1 | 1 | 1 |
| Crosslinking Promoter[*9] | 1.5 | 1.5 | 1.5 | 1.5 |
| Sulfur (Crosslinking Agent) | 1.05 | 1.05 | 1.05 | 1.05 |
| Adhesiveness (N/25 mm) | 35 | 45 | 50 | 85 |

Notes *1 to *10 in Tables 1 and 2 mean as follows.
*1 natural rubber (trade name: BC2X, manufacturer: Thai Natural Rubber)
*2 2,3-dimercapto-1-propanol (manufacturer: Kanto Chemical Co., Inc.), molecular formula: $SHCH_2CH(SH)CH_2OH$, molecular weight: 124
*3 4-hydroxythiophenol (Sankyo Kasei Co., Ltd.), molecular formula: $C_6H_6O_2S$, molecular weight: 142
*4 3-isocyanatopropyltriethoxysilane (Shin-Etsu Chemical Co., Ltd.), molecular formula: $(C_2H_5O)_3SiC_3H_6N=C=O$, molecular weight: 247
*5 isoprene (2-methyl-1,3-butadiene) (manufacturer: Zeon Corporation), molecular formula: $C_5H_8$, molecular weight: 68
*6 HAF carbon (trade name: SEAST NB, manufacturer: Tokai Carbon Co., Ltd.)
*7 butylphenol acetylene resin (trade name: Koresin, manufacturer: BASF Aktiengesellschaft)
*8 N-phenyl-N'-(1,3-dimethylbutyl)-p-phenylenediamine (trade name: Antigen 6C, manufacturer: Sumitomo Chemical Co., Ltd.)
*9 N-cyclohexyl-2-benzothiazolesulfenamide (trade name: NOCCELER CZ-G, manufacturer: Ouchi Shinko Chemical Industrial Co., Ltd.)
*10 epoxidized natural rubber (trade name: ENR25, manufacturer: RRIM) (degree of epoxidation (epoxidation rate): 25%)

It can be seen from Table 1 that the adhesive compositions of Examples 1 to 8 to which the low-molecular compound of the present invention was added may improve adhesiveness more than the adhesive compositions of Comparative Examples 1 to 4 to which the low-molecular compound of the present invention was not added.

It can be understood from Table 2 that the adhesive compositions of Examples 9 to 11 to which the low-molecular compound of the present invention was added may improve adhesiveness more than the adhesive compositions of Comparative Example 5 to which the low-molecular compound of the present invention was not added.

REFERENCE SIGNS LIST

10　Resin film layer (film layer)
11　Adhesive layer (insulation layer)
12　Butyl inner layer
13　Squeegee layer
14　Carcass cord layer (rubber layer)

20 Resin film layer (film layer)
21 Adhesive layer (insulation layer)
22 Carcass cord layer (rubber layer)

**Claims**

1. An adhesive composition comprising:

 a rubber component containing a diene-based elastomer; and
 a compound having a polar functional group in its molecule,
 wherein the content of the compound is 10 parts by mass to 90 parts by mass per 100 parts by mass of the diene based elastomer and
 wherein the compound has a molecular weight of 500 or less.

2. The adhesive composition according to claim 1, wherein the polar functional group has any of a nitrogen atom, an oxygen atom, a sulfur atom, a silicon atom, and a tin atom.

3. The adhesive composition according to any of claims 1 to 2, wherein the polar functional group is at least one selected from an amino group, an imino group, a nitrile group, an ammonium group, an isocyanate group, an imide group, an amide group, a hydrazo group, an azo group, a diazo group, a hydroxyl group, a carboxyl group, a carbonyl group, an epoxy group, an oxycarbonyl group, a sulfide group, a disulfide group, a sulfonyl group, a sulfinyl group, a thiocarbonyl group, a nitrogen-containing heterocyclic group, an oxygen-containing heterocyclic group, an alkoxysilyl group, and a tin-containing group.

4. The adhesive composition according to any of claims 1 to 3, wherein the compound has a part crosslinkable with a diene-based rubber and the crosslinkable part contains a sulfur atom and/or a vinyl group.

5. The adhesive composition according to any one of claims 1 to 4 further comprising a crosslinking agent.

6. The adhesive composition according to any of claims 1 to 5 further comprising a crosslinking promoter.

7. An adhesion method for adhering a film layer to an unvulcanized rubber layer, comprising: disposing the adhesive composition according to any of claims 1 to 6 between a film layer and an unvulcanized rubber layer; and vulcanizing the film layer and the unvulcanized rubber layer.

8. The adhesion method according to claim 7, wherein an application liquid formed by dissolving the adhesive composition in a good solvent is applied to the film layer or the unvulcanized rubber layer.

9. The adhesion method according to claim 7 or 8, wherein the adhesive composition is formed into a sheet before being disposed between the film layer and the unvulcanized rubber layer.

10. A laminate formed by the adhesion method according to any of claims 7 to 9.

11. A tire comprising the laminate according to claim 10.

**Patentansprüche**

1. Adhäsive Zusammensetzung, umfassend:

 eine Kautschukkomponente, die ein Dien-basiertes Elastomer enthält; und
 eine Verbindung mit einer polaren funktionellen Gruppe in ihrem Molekül,
 wobei der Gehalt der Verbindung 10 Masseteile bis 90 Masseteile je 100 Masseteile des Dien-basierten Elastomers beträgt und
 wobei die Verbindung ein Molekulargewicht von 500 oder weniger aufweist.

2. Adhäsive Zusammensetzung nach Anspruch 1, wobei die polare funktionelle Gruppe irgendeines von einem Stickstoffatom, einem Sauerstoffatom, einem Schwefelatom, einem Siliziumatom und einem Zinnatom aufweist.

**3.** Adhäsive Zusammensetzung nach einem der Ansprüche 1 bis 2, wobei die polare funktionelle Gruppe zumindest eine ist, die ausgewählt ist aus einer Aminogruppe, einer Iminogruppe, einer Nitrilgruppe, einer Ammoniumgruppe, einer Isocyanatgruppe, einer Imidgruppe, einer Amidgruppe, einer Hydrazogruppe, einer Azogruppe, einer Diazogruppe, einer Hydroxylgruppe, einer Carboxylgruppe, einer Carbonylgruppe, einer Epoxygruppe, einer Oxycarbonylgruppe, einer Sulfidgruppe, einer Disulfidgruppe, einer Sulfonylgruppe, einer Sulfinylgruppe, einer Thiocarbonylgruppe, einer stickstofflialtigen heterocyclischen Gruppe, einer sauerstoffhaltigen heterocyclischen Gruppe, einer Alkoxysilylgruppe und einer zinnhaltigen Gruppe.

**4.** Adhäsive Zusammensetzung nach einem der Ansprüche 1 bis 3, wobei die Verbindung einen Teil aufweist, der mit einem Dien-basierten Kautschuk vernetzbar ist, und der vernetzbare Teil ein Schwefelatom und/oder eine Vinylgruppe enthält.

**5.** Adhäsive Zusammensetzung nach einem der Ansprüche 1 bis 4, die weiterhin ein Vernetzungsmittel umfasst.

**6.** Adhäsive Zusammensetzung nach einem der Ansprüche 1 bis 5, die weiterhin einen Vernetzungsförderer umfasst.

**7.** Adhäsionsverfahren zum Haftenlassen einer Filmschicht an einer unvulkanisierten Kautschukschicht, umfassend: Anordnen der adhäsiven Zusammensetzung nach einem der Ansprüche 1 bis 6 zwischen einer Filmschicht und einer unvulkanisierten Kautschukschicht; und Vulkanisieren der Filmschicht und der unvulkanisierten Kautschukschicht.

**8.** Adhäsionsverfahren nach Anspruch 7, wobei eine Aufbringungsflüssigkeit, die durch Lösen der adhäsiven Zusammensetzung in einem guten Lösungsmittel gebildet wird, auf die Filmschicht oder die unvulkanisierte Kautschukschicht aufgebracht wird.

**9.** Adhäsionsverfahren nach Anspruch 7 oder 8, wobei die adhäsive Zusammensetzung zu einem Flächengebilde geformt wird, bevor sie zwischen der Filmschicht und der unvulkanisierten Kautschukschicht angeordnet wird.

**10.** Laminat, gebildet durch das Adhäsionsverfahren nach einem der Ansprüche 7 bis 9.

**11.** Reifen, umfassend das Laminat nach Anspruch 10.

## Revendications

**1.** Composition adhésive comprenant:

un constituant de caoutchouc contenant un élastomère à base de diène; et
un composé ayant un groupe fonctionnel polaire dans sa molécule,
dans laquelle la teneur en le composé est de 10 parties en masse à 90 parties en masse pour 100 parties en masse de l'élastomère à base de diène et
dans laquelle le composé a un poids moléculaire de 500 ou moins.

**2.** Composition adhésive selon la revendication 1, dans laquelle le groupe fonctionnel polaire a l'un quelconque parmi un atome d'azote, un atome d'oxygène, un atome de soufre, un atome de silicium et un atome d'étain.

**3.** Composition adhésive selon l'une quelconque des revendications 1 à 2, dans laquelle le groupe fonctionnel polaire est au moins l'un choisi parmi un groupe amino, un groupe imino, un groupe nitrile, un groupe ammonium, un groupe isocyanate, un groupe imide, un groupe amide, un groupe hydrazo, un groupe azo, un groupe diazo, un groupe hydroxyle, un groupe carboxyle, un groupe carbonyle, un groupe époxy, un groupe oxycarbonyle, un groupe sulfure, un groupe disulfure, un groupe sulfonyle, un groupe sulfinyl, un groupe thiocarbonyle, un groupe hétérocyclique contenant de l'azote, un groupe hétérocyclique contenant de l'oxygène, un groupe alcoxysilyle et un groupe contenant de l'étain.

**4.** Composition adhésive selon l'une quelconque des revendications 1 à 3, dans laquelle le composé a une partie réticulable avec un caoutchouc à base de diène et la partie réticulable contient un atome de soufre et/ou un groupe vinyle.

**5.** Composition adhésive selon l'une quelconque des revendications 1 à 4, comprenant en outre un agent de réticulation.

**6.** Composition adhésive selon l'une quelconque des revendications 1 à 5, comprenant en outre un promoteur de réticulation.

**7.** Procédé d'adhésion pour faire adhérer une couche pelliculaire à une couche de caoutchouc non vulcanisé, comprenant: l'application de la composition adhésive selon l'une quelconque des revendications 1 à 6 entre une couche pelliculaire et une couche de caoutchouc non vulcanisé; et la vulcanisation de la couche pelliculaire et de la couche de caoutchouc non vulcanisé.

**8.** Procédé d'adhésion selon la revendication 7, dans lequel un liquide d'application formé en dissolvant la composition adhésive dans un bon solvant est appliqué sur la couche pelliculaire ou la couche de caoutchouc non vulcanisé.

**9.** Procédé d'adhésion selon la revendication 7 ou 8, dans lequel la composition adhésive est façonnée en une feuille avant d'être disposée entre la couche pelliculaire et la couche de caoutchouc non vulcanisé.

**10.** Stratifié formé par le procédé d'adhésion selon l'une quelconque des revendications 7 à 9.

**11.** Pneumatique comprenant le stratifié selon la revendication 10.

# FIG. 1

14
13
12
11
10

# FIG. 2

22
21
20

EP 2 700 689 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7082418 A
- JP 2007098843 A
- EP 2045102 A
- US 2009165913 A
- EP 1818187 A
- EP 1666242 A
- US 5088537 A
- US 2010186866 A
- JP 2009528178 A
- JP 2010254769 A
- JP 11263954 A
- WO 2006059621 A